# EUROPEAN PATENT APPLICATION

(11) **EP 2 415 576 A1**
(43) Date of publication of application: **08.02.2012**
(21) Application number: 11176648.1
(22) Date of filing: 05.08.2011
(51) Int. Cl.: B29C 33/48, B29C 45/44, B29C 45/33

(54) **Method of picking up a cast**

(30) Priority: 05.08.2010 JP 2010175924
(71) Applicant: Honda Motor Co., Ltd., Tokyo 107-8556 (JP)
(72) Inventor: Miura, Shingo, Tochigi, 321-3395 (JP); Higashi, Shunsuke, Tochigi, 321-3395 (JP); Fuakuchi, Makoto, Tochigi, 321-3395 (JP)
(74) Representative: Beder, Jens

(57) **Abstract**

A method to pick up a cast from a die comprising:
A process to detach an upper die (5) from a lower die (4).
A process to detach a right and left outside slide core (6a, 6b) from a cast (1) after the above process.
A process to bring close to each other and push up a right and left slope core (7a, 7c) until the width of both ends of the right and left slope core are shorter than the distance between the ends of the cast (1) after the above process.
A process to separate the slope core (7a, 7c) from the cast (1) by moving the cast (1) after the above process.

## Description

### BACKGROUND OF THE INVENTION

### FIELD OF THE INVENTION

Present invention relates to a method to pick up a cast having an undercut portion from a die.

### DESCRIPTION OF THE PRIOR ART

It is known as a conventional method to roll up an undercut portion of a cast and then pick up the cast from a die, for example, Japanese Patent Application Publication No. 2007-69507describes a method of die release, that is, support a cast by a part of the die and roll up the inner end of the flange of the cast, and then extrude a cast outward than the outer edge of the slide die.

### DISCLOSURE OF THE INVENTION

### PROBLEM TO BE SOLVED BY THE INVENTION

However, the invention as described in Patent Document 1 has a problem; that is the mechanism which rolls up a cast must be provided in the inside of the die. Therefore the structure of the die becomes complicated, and it is necessary to synchronize the pick up device of the cast with the movement of the die. Furthermore, the means is also complicated.

The purpose of the present invention is to solve the above problem and supply a method to pick up a cast without the roll up the cast.

### MEANS FOR SOLVING THE PROBLEM

In order to solve above-mentioned problems, a method to pick up a cast from a die, the shape of the cast is channel like and has a tail part provided on the undercut portion and a side part (with right and left sections) is provided on the undercut portion, the undercut portion extends to the right and left portion of the tail part, comprising:
A process to separate an upper die from a lower die.
A process to separate a right and left outside slide core from a cast following the above process.
A process to bring close to each other and push up a right and left slope core until the width of both ends of the right and left slope core becomes shorter than the distance between the ends of the cast after the above process. The slope core is divided into a right and left section to mold an undercut portion respectively.
A process to separate the slope core from the cast by moving the cast after the above process.
A process to separate a straight push core from the cast after, or at the same time as, the above process.

### EFFECT OF THE INVENTION

The present invention makes it possible to pick up a cast having an undercut portion from a die without rolling up an undercut portion, Therefore it prevents a cast from causing elastic deformation just after forming and thus, an improvement in the quality can be expected.

### BRIEF DESCRIPTION OF THE DRAWINGS

FIG. 1 is an illustration of a cast, (a) is a plane view, (b) is a back view.
FIG. 2 is an illustration of a molding apparatus, (a) is a sectional view, (b) is a side view.
FIG. 3 is an illustration of a device carrying out a method of the present invention, (a) is a front view, (b) is a side view.
FIG. 4 is an illustration of a separation process of an upper die, (a) is a front view, (b) is a side view.
FIG. 5 is an illustration of a separation process of an outside slide core, (a) is a front view, (b) is a side view.
FIG. 6 is an illustration of a bringing close to each other and pushing up process of a slope core, (a) is a front view, (b) is a side view.
FIG. 7 is an illustration of the width of both ends of the right and left slope core and the distance between the ends of the cast.
FIG. 8 is an illustration of a separation process of an outside slide core, (a) is a front view, (b) is a side view.
FIG. 9 is an illustration of a separation process of a straight push core, (a) is a front view, (b) is a side view.

### DESCRIPTION OF THE ENBODIMENTS

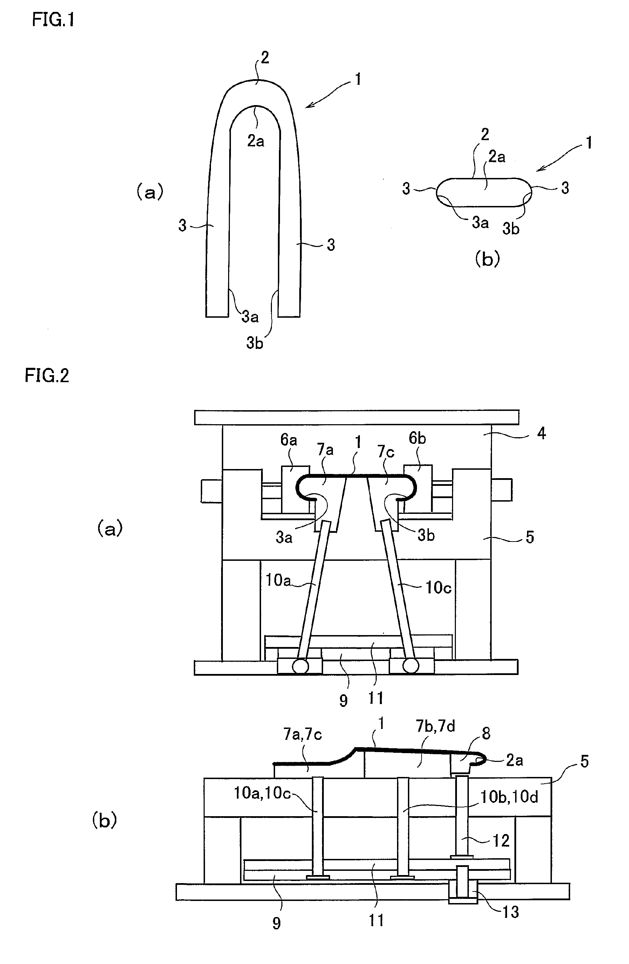

Embodiment of the invention is explained to the attached drawings. As shown in Fig 1, for example, the cast 1 which is the object of the method of the present invention is a rear cowl of a motorcycle. The shape of the rear cowl is channel like and has a tail part 2 provided undercut portion 2a and a side part 3 of one pair of right and left provided undercut portion 3a, 3b, the undercut portion 3a, 3b extends to the right and left portion of the tail part 2.

An injection mold apparatus to mold such a cast 1 is shown in FIG. 2, and in FIG. 2(b) the upper die 4 is omitted.

The injection mold apparatus is comprised of an upper die 4, a lower die 5, right and left outside slide core 6a, 6b which slide to right and left, right and left slope core, each side of the slope core is divided into two and this slope core 7a, 7b, 7c, 7d mold the right and left undercut portion 3a, 3b of the side part 3, and a straight push core 8 which molds the undercut portion 2a of the tail part 2.

The slope core 7a, 7b, 7c, 7d is joined to a rod 10a, 10b, 10c, 10d which is connected to a first push plate 9 placed below the lower die 5, the first push plate 9 performs elevation by a drive means not-shown, and the slope core 7a, 7b, 7c, 7d work with the movement of the first push plate 9 and make a diagonal elevation. Then the left slope core 7a, 7b and the right slope core 7c, 7d separate away and come close to each other according the diagonal elevation.

Also, the second push plate 11 is disposed between the lower die 5 and the first push plate 9, and a straight push rod 12 is connected to the second push plate 11, the straight push rod 12 performs the elevation of the straight push core 8.

The first push plate 9 and the second push plate 11 perform elevation by two stepped hydraulic cylinders 13, and the stroke of the second push plate 11 is set to be longer than

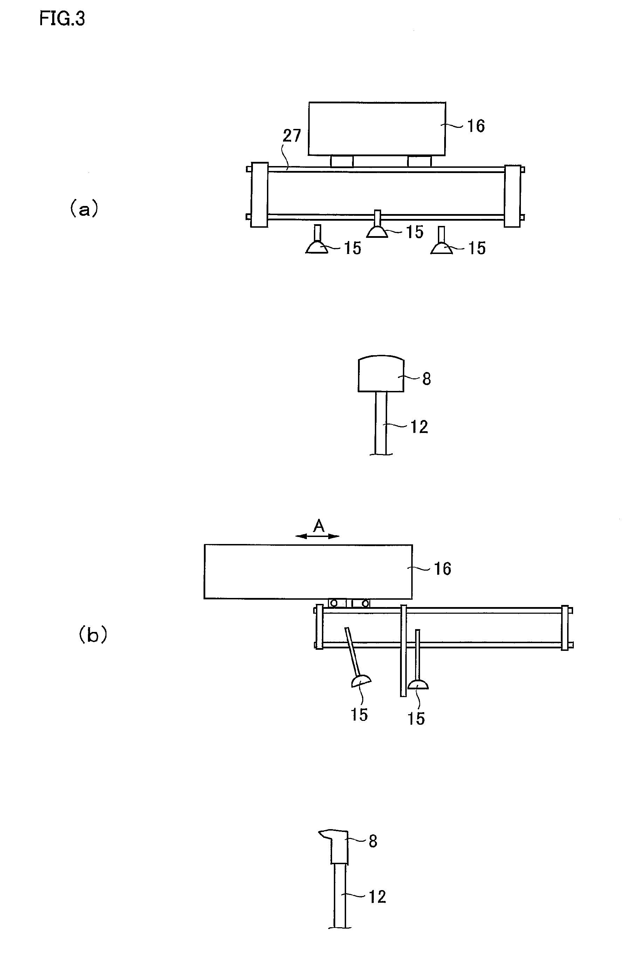

The device which picks up the cast 1 from a die after forming is shown in Fig 3, this device includes an adsorption means 15 to adsorb the cast 1 after the mold release, a moving means 16 to move the adsorption means 15 that has adsorbed the cast 1 in the arrow A direction.

As for the adsorption means 15, three suction cups are provided in total, one suction cup adsorbs the tail section 2 of cast 1, and the other two suction cups adsorb the side part 3.

And when the second push plate 11 rises by being driven by the drive of the two stepped hydraulic cylinder 13, the straight push rod 12 connected with the second push plate 11 rises, and the straight push core 8 is pushed up. Then the cast 1 abuts with adsorption means 15, and is adsorbed.

A pick up method of the present invention, using the apparatus which is comprised as above, is explained below.

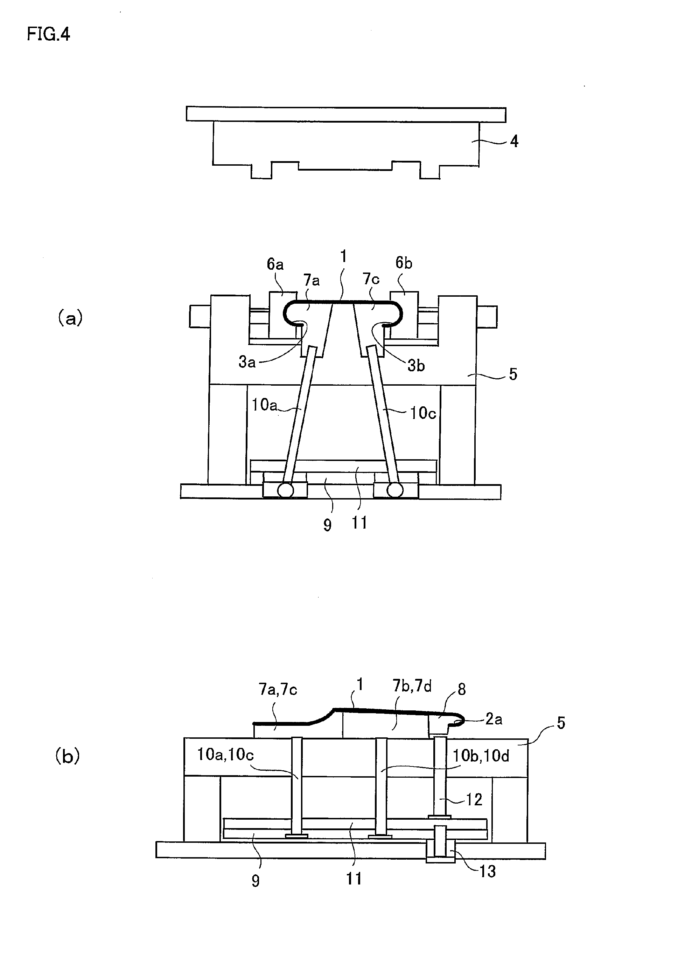

At first, as shown in FIG. 4, after molding, the upper die 4 rises and the upper die 4 detaches from the lower die 5, and the opening of the die is completed. (upper die separation process).

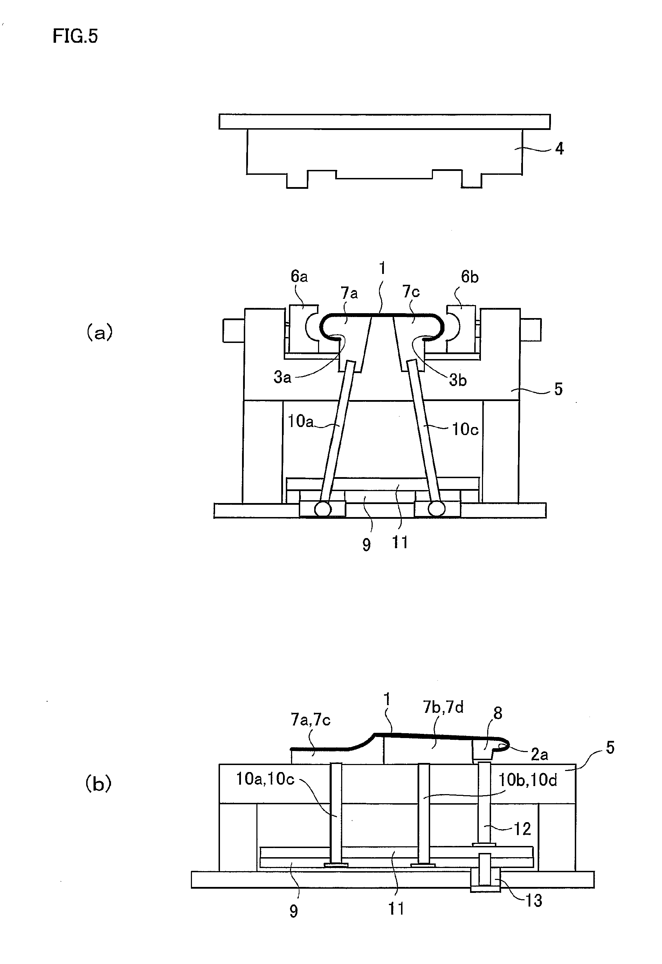

And, as shown in FIG. 5, the right and left slide core 6a, 6b retreat outside, the right and left slide core 6a, 6b detach from the cast 1.(outside slide core separation process).

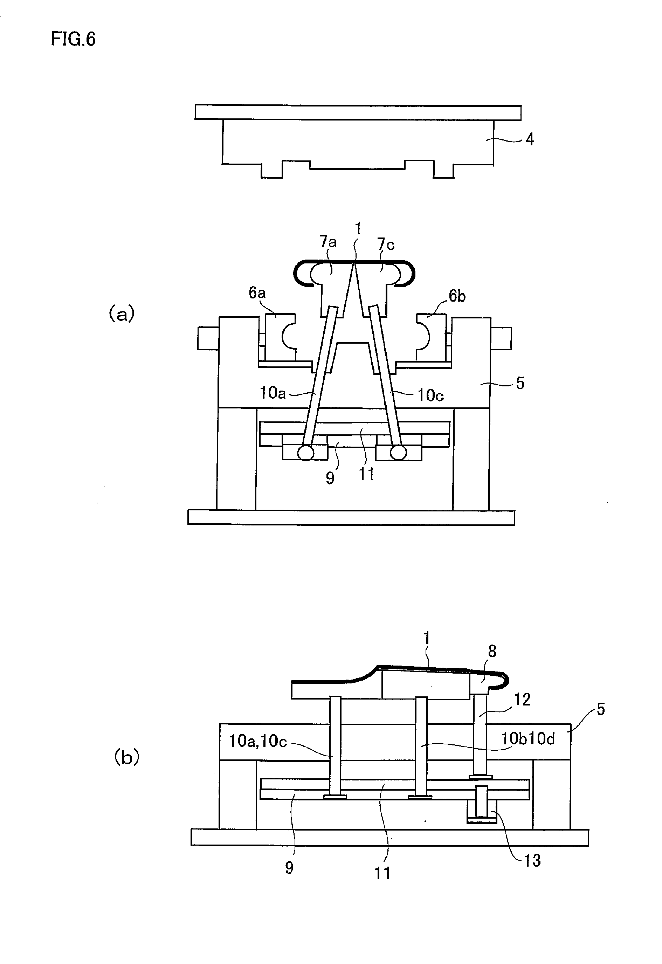

Then, as shown in FIG. 6, the right and left slope core 7a, 7b, 7c, 7d are brought close together by a drive means (not shown), also the right and left slope core 7a, 7b, 7c, 7d is pushed up with the above described movement by two stepped hydraulic cylinder 13 (slope core coming together and pushing up process).

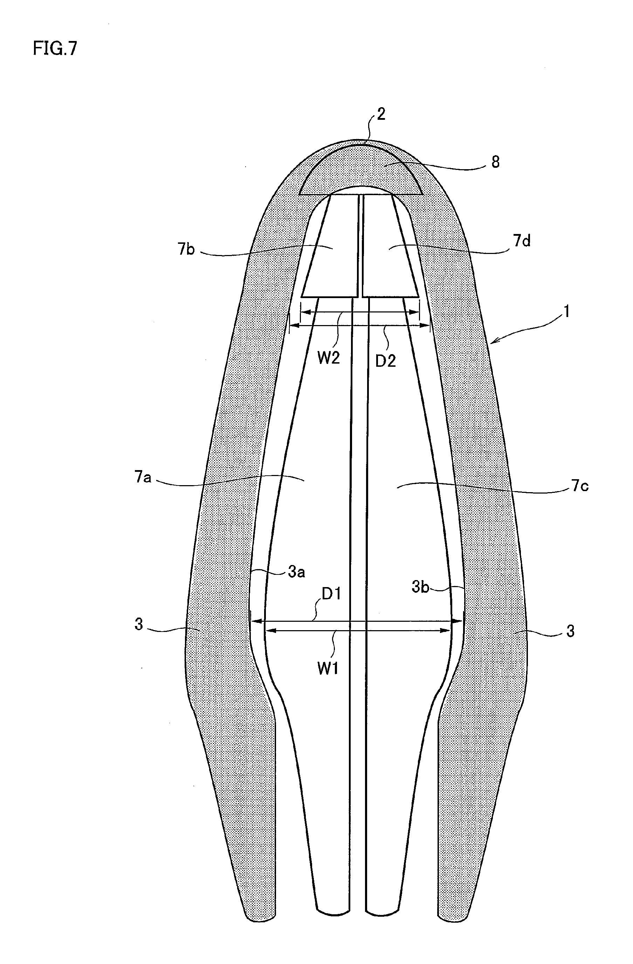

At this time, as shown in FIG. 7, the width W1 of the right and left slope core 7a, 7c becomes shorter than the opposed distance D1 between the ends of the undercut portion 3a, 3b, also the width W2 of the right and left slope core 7b, 7d becomes shorter than the opposed distance D2 between the ends of the undercut portion 3a, 3b.

So that it can make the slope core 7a, 7b, 7c, 7d lift more smoothly from cast 1 in the next process.

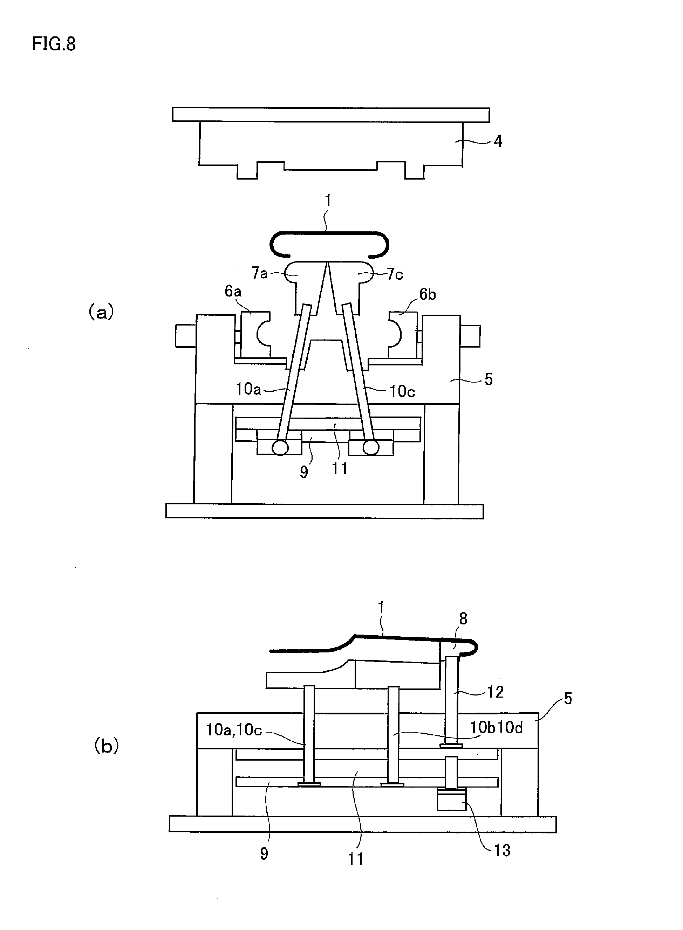

As shown in FIG. 8, the second push plate 11 rises by the drive of two stepped hydraulic cylinder 13, and the straight push rod 12 rises, then the straight push rod 12 pushes up the tail part 2 and goes through the straight push core 8, the slope core 7a, 7b, 7c, 7d detaches from the cast 1. (slope core separating process).

And, the cast 1 abuts with three adsorption means (suction cups) 15 and is adsorbed, the three adsorption means are located so as to adsorb at one place on the tail part 2 and at two places on the side part 3.

In the process to separate the slope core, depending on the shape of the cast 1, it is possible to pick up the cast 1 from the slope core 7a, 7b, 7c, 7d by moving the cast 1 horizontally without pushing up the straight push core 8.

Also, as a means to move cast 1, it is conceivable that a gripping means, clamping means or support means can be applied as an alternative to the adsorption means 15.

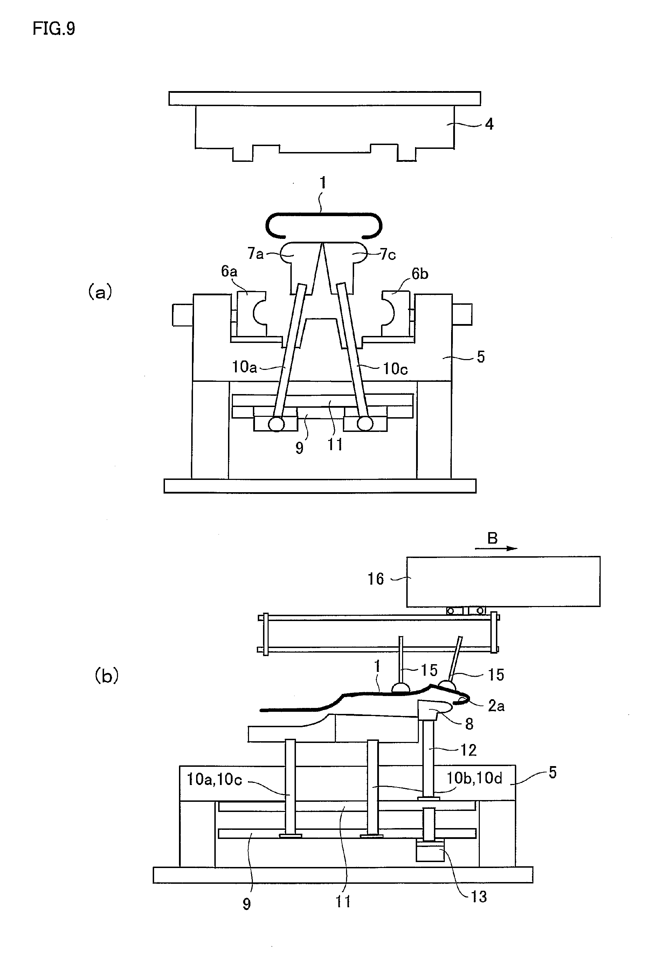

Then, as shown in FIG. 9, by moving the moving means 16 in the arrow B direction, the undercut portion 2a of the tail part 2 detaches from the straight push core 8 smoothly. (straight push core separation process). and the cast 1 is completely released from the die.

The work to pick up the cast 1 having an undercut portion 2a, 3a, 3b from a die is finished and the die 4, 5 return to a state shown in FIG. 2 (a).

In the process to separate the slope core, when picking up the cast 1 from the slope core 7a, 7b, 7c, 7d by moving the cast 1 horizontally without pushing up the straight push core 8 then the slope core 7a, 7b, 7c, 7d, detaching process of the slope core and the separation process of the straight push core 8 are carried out at the same time, and the slope core 7a, 7b, 7c, 7d and straight push core 8 detach from the cast 1 at the same time.

In the above embodiment, the die 4, 5 are installed so that a mold release direction becomes vertical, However, the die 4, 5 and the moving means 16 are turned through 90 degrees, so that the mold release direction becomes horizontal.

### INDUSTRIAL APPLICABILITY

The present invention makes it possible to pick up a cast having an undercut portion from a die without rolling up an undercut portion.

### DESCRIPTION OF THE NUMERALS

1... cast, 2... tail part, 2a, 3 a, 3b...undercut portion, 3 ... side part, 4 ... die, 5...die, 6a, 6b ... outside slide core, 7 a, 7b, 7c, 7d ... slope core, 8...straight push core, 9... first push plate, 10 a, 10b, 10c, 10d...rod, 11...second push plate, 12...straight push rod, 13...two stepped hydraulic cylinder, 15... adsorption means, 16... moving means

## Claims

1. A method to pick up a cast (1) from a die, the shape of the cast (1) is channel like and has a tail part provided on the undercut portion and a side part with right and left sections is provided on the undercut portion, the undercut portion extends to the right and left portion of the tail part,
comprising:
a process to separate an upper die (5) from a lower die (4),
a process to detach a right and left outside slide core from a cast (1) after the above process,
a process to bring closer together and push up a right and left slope core (7a, 7c) until the width of both ends of the right and left slope core (7a, 7c) are shorter than the distance between the ends of the cast (1) after the above process. The slope core (7a, 7c) is divided into a right and left section to mold an undercut portion respectively,
a process to separate the slope core (7a, 7c) from the cast (1) by moving the cast (1) after the above process,
a process to separate a straight push core from the cast (1) after the above process or at the same time.
